# EUROPÄISCHE PATENTSCHRIFT

(11) **EP 0 814 457 B1**
(45) Veröffentlichungstag und Bekanntmachung des Hinweises auf die Patenterteilung: **10.04.2002**
(21) Anmeldenummer: 96114919.2
(22) Anmeldetag: 18.09.1996
(51) Int. Cl.: G10L 15/08, G06F 17/28

(54) **Verfahren zur automatischen Erkennung eines gesprochenen Textes**
Method for automatic recognition of a spoken text
Procédé de reconnaissance automatique d'un texte parlé

(30) Priorität: 22.06.1996 DE 19624988
(43) Veröffentlichungstag der Anmeldung: 29.12.1997
(73) Patentinhaber: Toma, Peter, Dr., Bariloche 8840 (AR)
(72) Erfinder: Toma, Peter, Dr., Bariloche 8840 (AR)
(74) Vertreter: Vetter, Hans, Dipl.-Phys. Dr.

(56) Entgegenhaltungen:
- EP-A- 0 012 777
- EP-A- 0 038 163
- US-A- 4 481 593
- US-A- 4 870 686

## Beschreibung

Die Erfindung betrifft ein Verfahren zur automatischen Erkennung eines gesprochenen Textes, insbesondere zur Verwendung bei einem automatischen Sprachübersetzungsverfahren, wobei der gesprochene Text mittels eines Mikrofons in elektrische Signalfolgen umgewandelt und diese einem Computer in digitalisierter Form zugeführt werden, wo sie mit in einem Spracheinheitenspeicher gespeicherten digitalen Signalfolgen (Wörterbucheintragungen) verglichen und entsprechend zugeordnet werden.

Eine automatische Erkennung eines gesprochenen Textes stellt die erste Voraussetzung für vollautomatische Sprachübersetzungsverfahren für gesprochene Texte dar. Sprachübersetzungsverfahren für geschriebene Texte sind beispielsweise aus der EP-A-12777 oder aus der EP-B-274281 bekannt. Diese bekannten Verfahren beruhen im wesentlichen darauf, einzelne Worte zu erkennen und jeweils in die gewünschte andere Sprache umzusetzen. Da häufig von ihrem Sinngehalt her sehr unterschiedliche Worte gleich ausgesprochen werden, so daß eine korrekte Zuordnung durch die Übersetzungseinrichtung selten möglich ist und gewöhnlich Probleme durch die oft andere Satzstellung und grammatikalischen Regeln der anderen Sprache auftreten, läßt die Qualität der Übersetzung zu wünschen übrig. Zwar sind bei den bekannten Verfahren bereits Grammatikregel-Korrektureinrichtungen vorgesehen, jedoch verbessern solche Korrekturen die Gesamtqualität der Übersetzung nicht in ausreichendem Maße, so daß das Ergebnis immer noch unbefriedigend bleibt.

Eine Aufgabe der vorliegenden Erfindung besteht darin, ein Verfahren zur automatischen Erkennung eines gesprochenen Textes zu schaffen, durch das eine automatische Erkennung eines gesprochenen Textes von wesentlich höherer Qualität erzielt werden kann.

Diese Aufgabe wird erfindungsgemäß dadurch gelöst, daß in einem Einspeichermodus zum Einspeichern von Spracheinheiten in den Spracheinheitenspeicher ein digitalisierter gesprochener Text durch Sprechpausenerkennung in Spracheinheiten unterteilt wird, die zumindest Satzteilen und ganzen Sätzen entsprechen, daß diese Spracheinheiten in der gesprochenen Reihenfolge in wesentlichen unter fortlaufenden Kennummern oder Adressen automatisch eingespeichert werden, daß die so gespeicherten Spracheinheiten jeweils bezüglich ihrer Länge und Digitalfolge analysiert und in Spracheinheitengruppen zusammengefaßt werden, die jeweils bestimmten Ähnlichkeitsanforderungen bezüglich ihrer Bit-Folgen genügen müssen, daß in wenigstens einer übergeordneten Ebene solche Spracheinheitengruppen Schlüsselbegriffen mit kürzeren Bit-Folgen zugeordnet werden, wobei wiederum bestimmte Ähnlichkeitskriterien erfüllt werden müssen, und daß in einem Erkennungsmodus beim Vergleichs- und Suchvorgang in der höchsten Ebene begonnen und danach zu der wenigstens einen nächstniederen Ebene übergegangen wird, wobei die jeweils als übereinstimmend mit den eingegebenen Spracheinheiten erkannten, gespeicherten Spracheinheiten und/oder eine entsprechende Kennung oder Adresse zur Anwahl eines Ausgabespeichers eingesetzt werden zur Ausgabe von geschriebenen und/oder gesprochenen und/oder abgebildeten Spracheinheiten in der gleichen oder wenigstens einer anderen Sprache.

Im erfindungsgemäßen Einspeichermodus werden Wörterbucheintragungen automatisch generiert, so daß Wörterbücher mit einer sehr großen Zahl von Eintragungen automatisch realisiert werden können. Bei einer sehr großen Zahl von Eintragungen sinkt die Fehlerrate. Trotz der sehr großen möglichen Zahl von Eintragungen erfolgt der Vergleichsund Suchvorgang relativ schnell, da durch die erfindungsgemäße automatische Gruppierung nach Schlüsselbegriffen und Ähnlichkeitsanforderungen immer nur ein Teil der Wörterbucheintragungen überprüft werden muß. Ein wesentlicher Vorteil besteht dabei darin, daß die Wörterbucheintragungen Satzteile und ganze Sätze darstellen, wie sie tatsächlich existieren und gesprochen werden, so daß eine hohe Übersetzungsqualität erreicht werden kann. Die Gefahr von unlösbaren Mehrdeutigkeiten bei der Übersetzung verringert sich dadurch beträchtlich. Durch den Einspeichermodus kann das Wörterbuch jederzeit erweitert werden. Das Verfahren eignet sich besonders gut zur vollautomatischen Übersetzung von allen möglichen sprachlichen Kommunikationen, wie Reden, Diskussionen, Konferenzen, Telefongesprächen usw., aus jeder natürlichen Sprache (Quellensprache) in eine oder mehrere andere natürliche Sprachen (Zielsprache).

Durch die in den Unteransprüchen aufgeführten Maßnahmen sind vorteilhafte Weiterbildungen und Verbesserungen des im Anspruch 1 angegebenen Verfahrens möglich.

Im Einspeichermodus werden in vorteilhafter Weise jeder gespeicherten Spracheinheit zusätzlich die Kennummern der vorangegangenen und der nachfolgenden Spracheinheit zugeordnet. Hierdurch kann bei späteren Vergleichsvorgängen überprüft werden, ob bestimmte Folgen von Spracheinheiten gebräuchlich bzw. schon einmal vorgekommen sind, so daß eine solche gespeicherte Folge ein zusätzliches Auswahlkriterium darstellen kann, wenn bei der Erkennung einer bestimmten Spracheinheit mehrere gleichwertige Auswahlmöglichkeiten vorliegen.

Um Mehrfachabspeicherungen für Spracheinheiten zu verhindern, werden im Einspeichermodus beim Auftreten einer Spracheinheit, die als bereits schon früher eingegeben erkannt wird, lediglich dieser bereits eingegebenen Spracheinheit zusätzlich die Kennummern derjenigen Spracheinheit zugeordnet, die der aktuellen Spracheinheit vorangehen oder nachfolgen. Dies wirkt sich für den Speicherplatzbedarf günstig aus.

Für das schnelle Aufsuchen von Spracheinheiten sind mehrere übergeordnete Ebenen von Vorteil, wobei die Schlüsselbegriffe oder -Bit-Folgen zu höheren Ebenen hin immer kürzer werden oder daß die Ähnlichkeitskriterien immer geringer werden. Hierdurch kann zunächst in der höchsten Ebene die zu suchende Spracheinheit dem am nächstkommenden Schlüsselbegriff zugeordnet werden. Danach wird in der nächstniederen Ebene unter den diesem Schlüsselbegriff zugeordneten längeren Schlüsselbegriffen oder Spracheinheiten, sofern es sich bereits um die niederste Ebene handelt, zugeordnet, bis die niederste Ebene erreicht wird. Dies geht sehr schnell, da nur ein kleiner Teil der Gesamteintragungen des Wörterbuchs überprüft werden muß. Ein besonderer Vorteil des erfindungsgemäßen Verfahrens liegt noch darin, daß direkt nach der Eingabe eines gesprochenen Textes und Einspeichern seiner Spracheinheiten in einem Testmodus derselbe Text ein zweites Mal im Erkennungsmodus eingegeben wird, wobei dann die Qualität der Erkennung anhand der aufeinanderfolgenden erkannten Kennummern oder sonstiger ausgegebener Erkennungskriterien geprüft wird. Da die Kennummern in einer Reihenfolge eingegeben werden, muß im Testmodus wieder diese Reihenfolge erkannt werden, wobei jede Abweichung von der Reihenfolge eine Fehlererkennung bedeutet.

Zur Unterteilung von eingegebenen gesprochenen Texten in Spracheinheiten dient ein Sprechpausen-Prüfmodus. Vor einem ersten Einspeichermodus werden durch diesen Sprechpausen-Prüfmodus auftretende Sprechpausen automatisch analysiert, und bezüglich ihrer zeitlichen Länge werden wenigstens kurze und lange Sprechpausen definiert, wobei im Einspeichermodus und Erkennungsmodus zunächst nur längere Spracheinheiten zwischen langen Sprechpausen berücksichtigt werden und erst nach vergeblicher Analyse die durch kurze Sprechpausen unterteilten kurzen Spracheinheiten analysiert werden. Durch die automatische Analyse der auftretenden Sprechpausen können die Besonderheiten jeder Sprache automatisch berücksichtigt werden, ohne daß eine aufwendige Berechnung oder Bestimmung jeweils üblicher Sprechpausen erforderlich wäre.

Um sowohl Speicherplatz zu sparen als auch um den Zugriff im Erkennungsmodus zu beschleunigen, werden die zu speichernden sowie die zu analysierenden digitalisierten Spracheinheiten einem automatischen Datenreduktionsverfahren unterzogen. Diese Datenreduktion erfolgt insbesondere stufenweise, wobei nach jeder Reduktionsstufe im Testmodus geprüft wird, ob noch eine befriedigende Erkennung möglich ist. Dann wird diejenige Reduktionsstufe für alle nachfolgenden Datenreduktionsvorgänge vorgegeben, bei der gerade noch befriedigende oder gute Ergebnisse erzielt werden. Hierdurch wird automatisch eine maximal mögliche Datenreduktion erzielt.

Eine weitere Möglichkeit zur Datenreduktion besteht darin, daß die zu speichernde sowie die zu analysierende digitalisierte Spracheinheit einer Umwandlung in einen phonetischen Code unterzogen wird, bei dem es sich vorzugsweise um das internationale phonetische Alphabet handelt.

Eine Speicherung und Handhabung der umgewandelten Spracheinheiten in hexadezimaler Form hat sich als besonders günstig erwiesen.

Die einer gespeicherten Spracheinheit zugeordneten Informationen werden zweckmäßigerweise in einem separaten Speicherbereich abgelegt, und ein Zugriff wird über eine der jeweiligen Spracheinheit zugeordnete Adresse ermöglicht.

Der Eingabemodus kann in vorteilhafter Weise in verschiedenen Sprachen durchgeführt werden, um jeweils gespeicherte Wörterbücher in diesen Sprachen automatisch zu bilden.

Eine noch schnellere Spracheinheitenerkennung wird dadurch erreicht, daß aus den am häufigsten vorkommenden Spracheinheiten ein Häufigkeitswörterbuch gebildet wird, auf das bei der Analyse von eingegebenen Spracheinheiten zuerst zugegriffen wird. Auch dieses Häufigkeitswörterbuch kann automatisch generiert und im ständigen Lernmodus geändert und erweitert werden. Die gespeicherten Spracheinheiten des Häufigkeitswörterbuchs werden dabei vorzugsweise in einem separaten Speicher oder Speicherbereich untergebracht.

Die analysierten und erkannten Spracheinheiten können auf dem Bildschirm und/oder einem Drucker und/oder über eine Tonwiedergabeeinrichtung in gleicher oder in eine andere Sprache übersetzter Form ausgegeben werden. Hierzu sind in wenigstens einem Ausgabespeicher auszugebende Spracheinheiten in wenigstens einer anderen Sprache gespeichert.

Die gespeicherten Spracheinheiten sind vorzugsweise mit syntaktischen und/oder semantischen Chiffrierungen und/ oder mit Bedeutungsinformationen versehen, die insbesondere in einem separaten Speicher oder Speicherbereich als zugeordnete Informationen abgelegt werden. Kann im Erkennungsmodus eine zu analysierende Spracheinheit nicht eindeutig zugeordnet werden, so erfolgt die Zuordnung bzw. die Auswahl zwischen mehreren Möglichkeiten anhand dieser zugeordneten Informationen. Zur Prüfung oder zur Ergänzung mit Informationen können die gespeicherten Spracheinheiten auch durch Sprecheingabe der zugeordneten Kennummern aufgerufen werden. Dies kann in vorteilhafter Weise auch dazu dienen, wenn Linguisten den gespeicherten Spracheinheiten Adressen oder sonstige Kennungen zuordnen, um beispielsweise auf ein Wörterbuch einer anderen Sprache zugreifen zu können. Schließlich ist jede gespeicherte Spracheinheit individuell mit einer zusätzlichen Kennung, Chiffrierung oder Adresse versehen, über die ein Zugriff auf wenigstens einen Ausgabespeicher zur Ausgabe von zugeordneten Spracheinheiten in einer anderen Sprache durchführbar ist.

Die zusätzliche Kennung, Chiffrierung oder Adresse kann den Spracheinheiten nacheinander durch Sprecheingabe zugeordnet werden, so daß der Vorgang schnell und einfach durchführbar ist.

Nach einer vergeblichen Analyse einer Spracheinheit wird diese zunächst im Eingabemodus eingespeichert und dann aufgerufen und mit Kennummern und/oder zusätzlichen Kennungen, Chiffrierungen oder Adressen versehen. Hierdurch können schnell und einfach Lücken im Wörterbuch geschlossen werden.

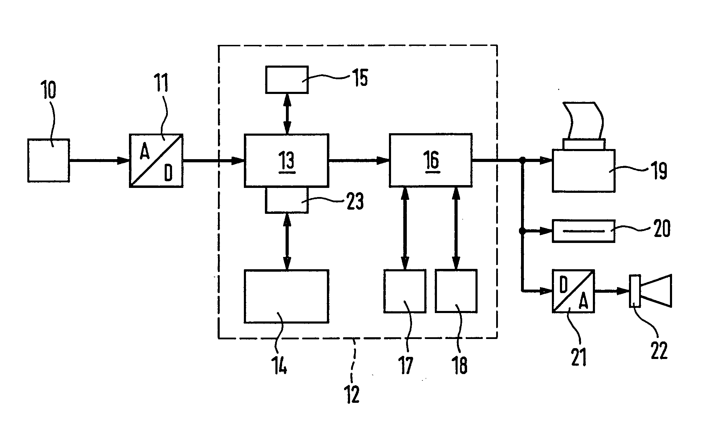

Ein Blockschaltbild einer Vorrichtung zur Durchführung des erfindungsgemäßen Verfahrens ist in der Zeichnung dargestellt und in der nachfolgenden Beschreibung zusammen mit dem erfindungsgemäßen Verfahren ausführlich beschrieben.

Ein Mikrofon 10 oder eine sonstige Umwandlungseinrichtung zur Umwandlung von Schallsignalen in elektrische Signale ist über einen Analog-Digital-Wandler 11 mit dem Spracheingang eines Spracherkennungs-Computers bzw. Sprachcomputers 12 verbunden, bei dem es sich beispielsweise um einen PC handeln kann. Zur Erläuterung des Sprachcomputers 12 wurde eine Darstellung gewählt, die die erforderlichen Funktionen und Funktionseinheiten für die Spracherkennung und Sprachübersetzung betont, während tatsächlich selbstverständlich der übliche Aufbau vorliegt, der im wesentlichen einen Mikroprozessor, einen Festwertspeicher, einen Arbeitsspeicher, eine Eingabetastatur, einen Bildschirm und Datenträger-Laufwerke enthält. Die dargestellten Funktionsblöcke werden real durch Funktionen des Mikroprozessors in Verbindung mit den übrigen, daran angeschlossenen Elementen des Computers realisiert.

Die dem Analog-Digital-Wandler 11 zugeführten analogen Signalfolgen, die den ins Mikrofon eingegebenen Sprechfolgen entsprechen, werden als digitale bzw. binäre Signalfolgen einer Spracherkennungseinrichtung 13 zugeführt. Diese ist mit einem Speicher 14 großen Speicherinhalts verbunden, in dem binäre Signalfolgen abgelegt sind, die Wörtern, Satzteilen und Sätzen entsprechen. Weiterhin sind der Spracherkennungseinrichtung 13 eine Sprechpausen-Erkennungseinrichtung 15 und eine Datenreduktionseinrichtung 23 zugeordnet.

Zur Spracherkennung werden durch die Sprechpausen-Erkennungseinrichtung 15 die Signalpausen der der Spracherkennungseinrichtung 13 zugeführten Signalfolgen analysiert und bezüglich ihrer zeitlichen Länge in drei Klassen klassifiziert. Selbstverständlich kann in einer einfacheren Version auch eine Klassifizierung in nur zwei Klassen oder bei aufwendigeren Ausführungen in eine noch größere Zahl von Klassen erfolgen. Die einer ersten Klasse zugeordneten sehr kurzen Signalpausen trennen die Eingangssignalfolge in Abschnitte auf, die beispielsweise einzelnen Worten entsprechen, während längere Signalpausen einer zweiten Klasse zugeordnet werden, um die Signalfolge in längere Abschnitte aufzuteilen, die beispielsweise Satzteilen entsprechen. Schließlich werden noch längere Signalpausen einer dritten Klasse zugeordnet, die einer Unterteilung der Signalfolge in noch längere Abschnitte entspricht, also beispielsweise in ganze Sätze. Dabei wird von der Überlegung ausgegangen, daß gemäß üblichen Sprechgewohnheiten zwischen ganzen Sätzen längere Sprechpausen, zwischen Satzteilen kürzere Sprechpausen und zwischen einzelnen Worten noch kürzere oder gar keine Sprechpausen gemacht werden.

Die Sprechpausen werden automatisch analysiert und jeder Sprache separat zugeordnet. Dazu werden zunächst durch das Mikrofon 10 größere gesprochene Texte eingelesen und digitalisiert. Dabei werden die Sprechpausen automatisch erfaßt, automatisch in die drei Klassen unterteilt und für die jeweilige Sprache gespeichert. Diese gespeicherten klassifizierten Sprechpausen werden dann im folgenden bei der Erkennung von gesprochenen Texten verwendet.

Zunächst werden lange und mittlere Pausen dazu verwendet, den gesprochenen Text in Spracheinheiten zu unterteilen. In einem Einspeichermodus wird zunächst ein sehr langer gespeicherter normierter Text, der beispielsweise auf einer CD-Speicherplatte niedergelegt ist, eingelesen und durch Erkennung der langen und mittleren Sprechpausen in Spracheinheiten unterteilt. Diese werden nun nacheinander als Wörterbucheintragungen im Speicher 14 abgelegt und nacheinander mit fortlaufenden Kennummern oder Seriennummern versehen, die für die Eintragung alleinbestimmend sind und bleiben. Zusätzlich wird jeder Eintragung die Kennummer der vorangehenden und der nachfolgenden Eintragung hinzugefügt. Dies ist dann bedeutend, wenn später bei der Analyse Mehrdeutigkeiten beim Aufsuchen von Spracheinheiten auftreten oder wenn die gefundene Wörterbucheintragung aus semantischen oder anderen Gründen nicht paßt oder keinen Sinn ergibt. Dann werden verschiedene ähnliche Spracheinheiten daraufhin untersucht, welche anderen Spracheinheiten häufig davor oder danach stehen, so daß dies als weiteres Auswahlkriterium genommen werden kann.

Erscheint im Einspeichermodus dieselbe Spracheinheit nochmals, was durch Vergleich mit den bereits gespeicherten Spracheinheiten festgestellt werden kann, so wird sie nicht nochmals eingespeichert, sondern der bereits gespeicherte Eintrag wird lediglich noch zusätzlich mit den Kennummern derjenigen Spracheinheiten versehen, die vor und nach der aktuellen Spracheinheit stehen.

Im Einspeichermodus werden die eingespeicherten Spracheinheiten gleichzeitig automatisch organisiert. Sie werden in Abhängigkeit ihrer Länge und Bit-Kombination in Ähnlichkeitsgruppen bzw. Spracheinheitengruppen zusammengefaßt, die bestimmten Ähnlichkeitsanforderungen bezüglich ihrer Bit-Folgen genügen. Solche Grund-Bit-Folgen, nach denen die Ähnlichkeitsgruppen aufgebaut sind, werden im folgenden als "Hauptwörter" bezeichnet. Diese nach Hauptwörtern organisierten Gruppen werden in einer übergeordneten Ebene nach "Schlüsselwörtern" wiederum in übergeordneten Gruppen zusammengefaßt, wobei die "Schlüssselwörter" kürzere Bit-Folgen darstellen, die in den Hauptwörtern nach bestimmten Ähnlichkeitskriterien vorkommen. Diese Organisation kann sich in noch höheren Ebenen entsprechend fortsetzen, so daß beim späteren Aufsuchen von Spracheinheiten nicht sämtliche Wörterbucheintragungen geprüft werden müssen, sondern von höheren Ebenen aus nur immer diejenigen Bereiche der niedrigen Ebenen ausgewählt werden müssen, in denen solche Schlüsselbegriffe bzw. Hauptwörter vorkommen, so daß die Auswahl von Wörterbucheintragungen begrenzt ist, zwischen denen letztlich entschieden werden muß, welche mit der gesuchten am besten übereinstimmt. Selbstverständlich können dabei auch Überschneidungen auftreten.

Nachdem der genormte Text im Einspeichermodus eingegeben worden ist, wird zur Überprüfung in einen Testmodus umgeschaltet, in dem der gleiche Text nochmals eingegeben wird und jetzt mit den vorgenommenen Eintragungen erkannt werden soll. Da die Wörterbucheintragungen im Einspeichermodus fortlaufende Kennummern erhalten haben, müssen jetzt bei der Erkennung wiederum Wörterbucheintragungen mit fortlaufenden Kennungen erkannt werden, da es sich um denselben Text handelt. Diese Kennummern der erkannten Wörterbucheintragungen können beispielsweise auf einem Bildschirm oder einem Drucker ausgegeben werden, wobei die fortlaufende Numerierung zeigt, daß der Text korrekt erkannt worden ist.

Im eigentlichen Arbeits- oder Erkennungsmodus findet im Prinzip derselbe Vorgang wiederum statt. Die durch Sprechpausen unterteilten Spracheinheiten des jeweils eingegebenen Textes werden bezüglich Schlüsselwörtern und Hauptwörtern analysiert und entsprechende ähnliche gespeicherte Spracheinheiten in einen Arbeitsspeicher gebracht, wo sie mit der zu untersuchenden Spracheinheit verglichen werden. Schließlich wird die ähnlichste gespeicherte Spracheinheit als zutreffend ausgewählt.

Den Eintragungen des Grundwörterbuchs, also den gespeicherten Spracheinheiten, die im wesentlichen Wörter, Ausdrücke, Satzteile und/oder Sätze sind, werden bei einer bevorzugten Ausführung durch Einzeleingabe oder automatisch grammatische Kennungen und/oder Informationen hinzugefügt. Damit erhalten diese Wörter bzw. Ausdücke eigene Identität. Weiterhin wird bei einer bevorzugten Ausführungsform eine Reihe von syntaktischen und/oder semantischen Chiffrierungen angefügt, so daß sie beispielsweise in semantische Kategorien eingegliedert werden können. Dies ist aus dem eingangs angegebenen Stand der Technik prinzipiell bekannt. Schließlich können noch kontextorientierte Informationen über die Bedeutung und den Aussagegehalt der betreffenden Spracheinheit angefügt werden. Mit Hilfe dieser Chiffrierungen kann eine detaillierte Analyse der Quellensprache stattfinden und der jeweilige Inhalt von einer oder mehreren Spracheinheiten beispielsweise zur Sprachübersetzung in einer "Zwischensprache" ausgedrückt werden, wobei die korrekten Bedeutungen in den Zielsprachen ausgewählt und in die entsprechende Form gebracht werden. Die gesamten Kennungen und Chiffrierungen können zum Teil automatisch angefügt werden, müssen jedoch zum Teil auch in Einzelarbeit durch Linguisten angefügt werden. Hierzu werden die gespeicherten Spracheinheiten nacheinander aufgerufen und mit diesen Chiffrierungen durch Tastatureingabe oder gesprochene Eingabe versehen. Diese zusätzlichen Informationen können in einem separaten Speicher oder Speicherbereich abgelegt werden und werden durch die Kennummer oder eine zugeordnete Adresse bei Bedarf erreicht. Dies bedeutet beispielsweise, daß, wenn im Erkennungsmodus eine Spracheinheit nicht eindeutig zugeordnet werden kann und mehrere gespeicherte Spracheinheiten sehr ähnlich sind, auf die zusätzlichen Informationen als zusätzliches Entscheidungskriterium zugegriffen wird. Weiterhin werden dann die gespeicherten Kennummern von benachbarten Eingaben analysiert. Wenn eine der in Frage kommenden gespeicherten Eintragungen ähnliche oder gleiche Kennummern von vorangehenden oder nachfolgenden Eintragungen enthält, so wird angenommen, daß diese Eintragung der zu analysierenden Eintragung am ehesten entspricht.

Um das Aufsuchen von Spracheinheiten bzw. Wörterbucheintragungen zu beschleunigen und um den zur Verfügung stehenden Speicherplatz möglichst gut auszunutzen, können die einzuspeichernden und zu analysierenden Spracheinheiten noch einer Datenreduktion unterzogen werden. Hierbei werden alle Informationen, die für das Aufsuchen nicht unbedingt erforderlich sind, wie Akzentuierung, Tonhöhe, Klangfarbe u.dgl., entfernt oder separat abgespeichert, um nur bei Bedarf darauf zurückgreifen zu können. Die einzuspeichernden Bit-Kombinationen werden von diesen Informationen befreit und dadurch stark gekürzt. Nach einer solchen definierten Datenreduktion wird im Testmodus geprüft, ob der Text noch einwandfrei erkannt wird. Danach wird er einer nochmaligen weiteren Datenreduktion unterzogen, wobei die Datenreduktion in Stufen so lange weitergeführt wird, bis eine befriedigende Erkennung des Textes nicht mehr möglich ist. Danach wird diejenige Datenreduktionsstufe ausgewählt und für zukünftige Vorgänge vorgegeben, bei der gerade noch ein gutes Ergebnis erzielt worden ist. Die Einspeicherung von Spracheinheiten erfolgt dann grundsätzlich mit dieser Datenreduktionsstufe, wobei die jeweils zu erkennenden bzw. zu analysierenden Spracheinheiten selbstverständlich ebenfalls derselben Datenreduktion unterzogen werden.

Eine weitere Möglichkeit der indirekten Datenreduktion besteht darin, daß die eingegebenen Spracheinheiten in einen phonetischen Code umgewandelt werden, wobei es sich beispielsweise um das internationale phonetische Alphabet handeln kann. Durch die Umwandlung in einen phonetischen Code wird die Datenmenge ebenfalls deutlich reduziert. Das Wörterbuch enthält in diesem Falle nur Eintragungen von in diesen phonetischen Code umgewandelten Spracheinheiten, wobei neu eingegebene zu erkennende Spracheinheiten ebenfalls in diesen phonetischen Code umgewandelt werden.

Bei beiden Formen der Datenreduktion werden die zu speichernden und zu erkennenden Spracheinheiten nach der Datenreduktion noch in hexadezimale Ausdrücke umgewandelt und in dieser Form gespeichert bzw. analysiert. Durch die Darstellung als phonetischer Code wird eine besonders einfache Darstellung auf dem Bildschirm oder dem Drucker oder bei der Sprachausgabe erreicht. Die Darstellung kann dann direkt in phonetischen Schriftzeichen erfolgen oder in umgewandelter Form.

Um die Zugriffsgeschwindigkeit zu erhöhen, kann zusätzlich noch ein Häufigkeitswörterbuch gebildet werden. Hierbei werden die am häufigsten vorkommenden Spracheinheiten in einem Häufigkeitswörterbuch zusammengestellt und in einem separaten Speicher oder Speicherbereich abgelegt. Bei der Erkennung wird zunächst auf dieses Häufigkeitswörterbuch zugegriffen, und erst wenn hierdurch eine Erkennung nicht möglich ist, wird auf die bereits beschriebene Suche im Grundwörterbuch übergegangen.

Sollte eine eingegebene Spracheinheit weder durch das Häufigkeitswörterbuch noch durch das allgemeine Wörterbuch analysiert werden können, so wird geprüft, ob die zu erkennende Spracheinheit durch kleine Pausen in Untereinheiten unterteilt werden kann bzw. unterteilt ist. Diese Untereinheiten werden dann im Häufigkeits- und allgemeinen Wörterbuch gesucht und analysiert. Wenn auch dies nicht erfolgreich ist, so werden die Teileinheiten nach Präpositionen oder Postpositionen untersucht, wobei dementsprechend der Anfangs- oder Endbereich der jeweiligen Teileinheit mit Tabellen verglichen wird, die die möglichen Präpositionen oder Postpositionen enthalten. Sollte eine Präposition oder Postposition identifiziert werden, so wird sie abgetrennt, und der übrige Bereich wird in den Wörterbüchern gesucht. Bei Nichtvorhandensein von Präpositionen oder Postpositionen kann ein entsprechendes Verfahren für Artikel, Fürwörter und Hilfsverben durchgeführt werden. Sollte die zu erkennende Spracheinheit keine kleinen Pausen enthalten und somit nicht weiter unterteilt werden können, so wird sie als ganze Einheit wie eine Teileinheit in der beschriebenen Weise geprüft.

Wenn bei der Texterkennung eine Spracheinheit definitiv nicht gefunden oder erkannt wird, so wird sie in einen separaten Speicherplatz abgelegt und/oder ausgedruckt. Bei der nächsten Aktualisierung oder Ergänzung des Wörterbuchs wird diese Spracheinheit dann eingegeben und definiert.

Zur Durchführung von Übersetzungen von erkannten Spracheinheiten in eine andere Sprache dient eine übersetzungseinrichtung 16, der im Ausführungsbeispiel zwei Fremdsprachenspeicher 17, 18 zugeordnet sind. In diesen sind jeweils aus Spracheinheiten bestehende Fremdsprachen-Wörterbücher gespeichert. Auch hier ist es selbstverständlich möglich, nur einen Fremdsprachenspeicher 17 vorzusehen, wenn eine Übersetzung nur in eine Fremdsprache erfolgen soll. Ebenso kann auch eine größere Anzahl von Fremdsprachenspeichern vorgesehen sein, wenn Übersetzungen in eine größere Zahl von Fremdsprachen erforderlich sind. Die Fremdsprachen-Wörterbücher in den Fremdsprachenspeichern 17, 18 werden in entsprechender Weise gebildet, wie dies beim allgemeinen Wörterbuch der Fall war, das im Speicher 14 niedergelegt ist. Hierzu kann der Sprachcomputer 12 in einen entsprechenden Fremdsprachen-Einspeichermodus umgeschaltet werden.

Zur Zuordnung von sich entsprechenden Spracheinheiten in den verschiedenen Sprachen müssen Zuordnungs-Chiffrierungen den jeweiligen gespeicherten Spracheinheiten zugeordnet werden. Dies erfolgt durch Linguisten, die die Eintragungen des allgemeinen Wörterbuchs nacheinander aufrufen und mit solchen Chiffrierungen versehen, wie dies bereits beschrieben ist. Mit Hilfe dieser Chiffrierungen kann über Adressen mittels der erwähnten "Zwischensprache"auf die entsprechenden Eintragungen in einem oder mehreren Fremdwörterbüchern zugegriffen und die entsprechende Eintragung zur Ausgabe in die Übersetzungseinrichtung 16 abgerufen werden.

Die Ausgabe kann dann als Schrift auf einen Drucker 19 oder Bildschirm erfolgen, oder die Ausgangssignalfolge wird einem Speichermedium zugeführt und dort gespeichert, beispielsweise auf einer Diskette eines Disketten-Laufwerks 20, auf einer beschreibbaren CD od.dgl. Schließlich kann auch eine direkte Sprachausgabe dadurch erfolgen, daß die Ausgangssignalfolge über einen Digital-Analog-Wandler 21 einem Lautsprecher 22 oder einem Kopfhörer zugeführt wird. Die verschiedenen Sprachausgabemöglichkeiten können simultan oder alternativ genutzt werden, wobei auch beispielsweise eine simultane Übersetzung in mehrere Sprachen möglich ist. Hierzu benötigt der Computer eine entsprechend große Anzahl von Ausgabeeinrichtungen und Ausgabekanälen.

Anstelle einer Ausgabe und Umsetzung in eine andere Sprache kann die Spracherkennung auch zur Ausgabe von Texten in der Basissprache dienen, beispielsweise um einen gesprochenen Text in einen geschriebenen Text automatisch umzuwandeln.

Das allgemeine Wörterbuch und eventuelle Fremdwörterbücher können in der beschriebenen Weise beliebig ergänzt werden. Das Häufigkeitswörterbuch wird dabei automatisch aktualisiert, das heißt, nach Art eines lernenden Systems enthält es immer dann zusätzliche Eintragungen, wenn diese in ihrer Häufigkeit vorhandene Eintragungen übertreffen. Wenn eine definierte Kapazität des Häufigkeitswörterbuchs erreicht ist, so werden dabei jeweils am wenigsten häufige Eintragungen gelöscht.

Die gespeicherten Wörterbücher können auch in bestimmter Weise für spezielle Anwendungen ergänzt werden. Beispielsweise können vor einer Konferenz auf dem Gebiet des Maschinenbaus die entsprechenden Fachwörter dem Wörterbuch hinzugefügt werden. Weiterhin kann dem Sprachcomputer mitgeteilt werden, daß es sich um Übersetzungen auf dem Gebiet des Maschinenbaus handelt. In diesem Falle können beim Vergleichs- und Suchvorgang von gespeicherten Spracheinheiten diejenigen bevorzugt werden, die Fachbedeutungen im Maschinenbau haben. Es können auch Suchfolgen vorgegeben werden, durch die Fachwörter bevorzugt werden, bevor die jeweilige allgemeine Bedeutung berücksichtigt wird.

Die bei der Datenreduktion abgetrennten Informationen, die z.B. Akzentuierungen, Tonhöhen, Klangfarben u.dgl. enthalten, können zur Verfeinerung der Übersetzungen verwendet werden oder zur Unterscheidung bei Mehrdeutigkeiten. Weiterhin können solche zusätzlichen Informationen, zu denen noch gewisse Tonvibrationen, Klangfarbeänderungen, unerwartete Änderungen in der Geschwindigkeit des Sprechens od.dgl. hinzukommen können, dazu benutzt werden, den emotionalen Zustand des Sprechenden zu analysieren, beispielsweise seinen Erregungszustand, seine Unsicherheit oder Sicherheit und Ähnliches. Weiterhin können sogar Kriterien aus der Art des Sprechens abgeleitet werden, ob das Gesagte der Wahrheit entspricht, nach Art eines Lügendetektors.

## Patentansprüche

1. Verfahren zur automatischen Erkennung eines gesprochenen Textes, insbesondere zur Verwendung bei einem automatischen Sprachübersetzungsverfahren, wobei der gesprochene Text mittels eines Mikrofons in elektrische Signalfolgen umgewandelt und diese einem Computer in digitalisierter Form zugeführt werden, wo sie mit in einem Spracheinheitenspeicher gespeicherten digitalen Signalfolgen (Wörterbucheintragungen) verglichen und entsprechend zugeordnet werden, **dadurch gekennzeichnet,**
**daß** in einem Einspeichermodus zum Einspeichern von Spracheinheiten in den Spracheinheitenspeicher (14) ein digitalisierter gesprochener Text durch Sprechpausenerkennung in Spracheinheiten unterteilt wird, die zumindest Satzteilen und ganzen Sätzen entsprechen, daß diese Spracheinheiten in der gesprochenen Reihenfolge in wesentlichen unter fortlaufenden Kennummern oder Adressen automatisch eingespeichert werden, daß die so gespeicherten Spracheinheiten jeweils bezüglich ihrer Länge und Digitalfolge analysiert und in Spracheinheitengruppen zusammengefaßt werden, die jeweils bestimmten Ähnlichkeitsanforderungen bezüglich ihrer Bit-Folgen genügen müssen, daß in wenigstens einer übergeordneten Ebene solche Spracheinheitengruppen Schlüsselbegriffen mit kürzeren Bit-Folgen zugeordnet werden, wobei wiederum bestimmte Ähnlichkeitskriterien erfüllt werden müssen, und daß in einem Erkennungsmodus beim Vergleichs- und Suchvorgang in der höchsten Ebene begonnen und danach zu der wenigstens einen nächstniederen Ebene übergegangen wird, wobei die jeweils als übereinstimmend mit den eingegebenen Spracheinheiten erkannten, gespeicherten Spracheinheiten und/oder eine entsprechende Kennung oder Adresse zur Anwahl eines Ausgabespeichers (17,18) eingesetzt werden zur Ausgabe von geschriebenen und/oder gesprochenen und/oder abgebildeten Spracheinheiten in der gleichen oder wenigstens einer anderen Sprache.

2. Verfahren nach Anspruch 1, **dadurch gekennzeichnet, daß** im Einspeichermodus jeder gespeicherten Spracheinheit zusätzlich die Kennummern der vorangegangenen und der nachfolgenden Spracheinheit zugeordnet werden.

3. Verfahren nach Anspruch 1 oder 2, **dadurch gekennzeichnet, daß** im Einspeichermodus beim Auftreten einer Spracheinheit, die als bereits schon früher eingegeben erkannt wird, lediglich dieser bereits eingegebenen Spracheinheit zusätzlich die Kennummern derjenigen Spracheinheit zugeordnet werden, die der aktuellen Spracheinheit vorangehen oder nachfolgen.

4. Verfahren nach einem der vorhergehenden Ansprüche, **dadurch gekennzeichnet, daß** bei mehreren übergeordneten Ebenen die Schlüsselbegriffe oder -Bit-Folgen zu höheren Ebenen hin immer kürzer werden oder daß die Ähnlichkeitskriterien immer geringer werden.

5. Verfahren nach einem der vorhergehenden Ansprüche, **dadurch gekennzeichnet, daß** in einem Testmodus nach der Eingabe eines gesprochenen Textes und Einspeichern seiner Spracheinheiten derselbe Text ein zweites Mal im Erkennungsmodus eingegeben wird und daß die Qualität der Erkennung anhand der aufeinanderfolgenden erkannten Kennummern oder sonstiger ausgegebener Erkennungskriterien geprüft wird.

6. Verfahren nach einem der vorhergehenden Ansprüche, **dadurch gekennzeichnet, daß** in einem Sprechpausen-Prüfmodus vor einem ersten Einspeichermodus auftretende Sprechpausen automatisch analysiert und bezüglich ihrer zeitlichen Länge wenigstens kurze und lange Sprechpausen definiert werden, wobei im Einspeichermodus und Erkennungsmodus zunächst nur längere Spracheinheiten zwischen langen Sprechpausen berücksichtigt werden und vorzugsweise erst nach vergeblicher Analyse die durch kurze Sprechpausen unterteilten kurzen Spracheinheiten analysiert werden.

7. Verfahren nach einem der vorhergehenden Ansprüche, **dadurch gekennzeichnet, daß** die zu speichernden sowie die zu analysierenden digitalen Spracheinheiten einem automatischen Datenreduktionsverfahren unterzogen werden.

8. Verfahren nach Anspruch 7, **dadurch gekennzeichnet, daß** die Datenreduktion stufenweise erfolgt, wobei nach jeder Reduktionsstufe im Testmodus geprüft wird, ob noch eine befriedigende Erkennung möglich ist, und daß diejenige Reduktionsstufe für alle nachfolgenden Datenreduktionsvorgänge vorgegeben wird, bei der gerade noch befriedigende oder gute Ergebnisse erzielt werden.

9. Verfahren nach einem der Ansprüche 1 bis 6, **dadurch gekennzeichnet, daß** die zu speichernden sowie die zu analysierenden digitalen Spracheinheiten einer Umwandlung in einen phonetischen Code unterzogen werden.

10. Verfahren nach Anspruch 9, **dadurch gekennzeichnet, daß** das internationale phonetische Alphabet als phonetischer Code verwendet wird.

11. Verfahren nach einem der Ansprüche 7 bis 10, **dadurch gekennzeichnet, daß** die umgewandelten Spracheinheiten in hexadezimaler Form gespeichert und analysiert werden.

12. Verfahren nach einem der vorhergehenden Ansprüche, **dadurch gekennzeichnet, daß** die einer gespeicherten Spracheinheit zugeordneten Informationen in einem separaten Speicher oder Speicherbereich abgelegt werden und ein Zugriff über eine der jeweiligen Spracheinheit zugeordnete Adresse oder Kennung ermöglicht wird.

13. Verfahren nach einem der vorhergehenden Ansprüche, **dadurch gekennzeichnet, daß** der Eingabemodus in verschiedenen Sprachen durchgeführt wird, um jeweils gespeicherte Wörterbücher in diesen Sprachen zu bilden.

14. Verfahren nach einem der vorhergehenden Ansprüche, **dadurch gekennzeichnet, daß** aus den am häufigsten vorkommenden Spracheinheiten ein Häufigkeitswörterbuch gebildet wird, auf das bei der Analyse eingegebener Spracheinheiten zuerst zugegriffen wird.

15. Verfahren nach Anspruch 14, **dadurch gekennzeichnet, daß** die gespeicherten Spracheinheiten des Häufigkeitswörterbuchs in einem separaten Speicher oder Speicherbereich untergebracht sind.

16. Verfahren nach Anspruch 14 oder 15, **dadurch gekennzeichnet, daß** das Häufigkeitswörterbuch nach Art eines lernenden Systems ständig in Abhängigkeit der auftretenden Häufigkeiten von Spracheinheiten aktualisiert wird.

17. Verfahren nach einem der vorhergehenden Ansprüche, **dadurch gekennzeichnet, daß** die analysierten und erkannten Spracheinheiten auf dem Bildschirm und/oder einem Drucker (19) und/oder über eine Tonwiedergabeeinrichtung (22) in gleicher oder übersetzter Form ausgegeben werden.

18. Verfahren nach einem der vorhergehenden Ansprüche, **dadurch gekennzeichnet, daß** in wenigstens einem Ausgabespeicher (17, 18) auszugebende Spracheinheiten in wenigstens einer anderen Sprache gespeichert werden.

19. Verfahren nach einem der vorhergehenden Ansprüche, **dadurch gekennzeichnet, daß** die gespeicherten Spracheinheiten mit syntaktischen und/oder semantischen Chiffrierungen und/oder kontextorientierten Chiffrierungen und/oder Zielsprachebedeutungen mit entsprechenden Synthese-Chiffrierungen versehen werden, die insbesondere in einem separater Speicher oder Speicherbereich als zugeordnete Informationen abgelegt werden, über die insbesondere ein Adressenzugriff möglich ist.

20. Verfahren nach Anspruch 19, **dadurch gekennzeichnet, daß** die syntaktischen und semantischen Chiffrierungen sowie kontextorientierten Informationen dazu benutzt werden, um den Inhalt der Spracheinheiten in den gesprochenen Texten festzustellen und durch besondere Chiffrierungen auszudrücken, die insbesondere eine "Zwischensprache" bilden.

21. Verfahren nach Anspruch 20, **dadurch gekennzeichnet, daß** auf der Basis der Zwischensprache in den Zielsprachen die korrekten, den Spracheinheiten entsprechenden Bedeutungen gewählt und durch Synthese-Chiffrierungen in die entsprechende korrekte Form gebracht werden.

22. Verfahren nach einem der vorhergehenden Ansprüche, **dadurch gekennzeichnet, daß** die gespeicherten Spracheinheiten auch durch Sprecheingabe der zugeordneten Kennnummern aufrufbar sind.

23. Verfahren nach einem der vorhergehenden Ansprüche, **dadurch gekennzeichnet, daß** jede gespeicherte Spracheinheit individuell mit einer zusätzlichen Kennung, Chiffrierung oder Adresse versehen wird, über die ein Zugriff auf wenigstens einen Ausgabespeicher (17, 18) zur Ausgabe von zugeordneten Spracheinheiten in wenigstens einer anderen Sprache durchführbar ist.

24. Verfahren nach Anspruch 23, **dadurch gekennzeichnet, daß** die gespeicherten Spracheinheiten nacheinander durch Spracheingabe mit der zusätzlichen Kennung, Chiffrierung oder Adresse versehen werden.

25. Verfahren nach einem der vorhergehenden Ansprüche, **dadurch gekennzeichnet, daß** bei nicht möglicher Zuordnung einer Spracheinheit oder einer Teileinheit einer Spracheinheit zu einer gespeicherten Spracheinheit eine Suche und Abtrennung von Präpositionen, Postpositionen, Artikeln, Fürwörtern und/oder Hilfsverben durchgeführt wird und daß für den Restbestandteil ein erneuter Erkennungsvorgang durchgeführt wird.

26. Verfahren nach einem der vorhergehenden Ansprüche, **dadurch gekennzeichnet, daß** nach einer vergeblichen Analyse einer Spracheinheit diese im Eingabemodus oder einem Zwischenspeichermodus gespeichert und dann bei einer Aktualisierung des Wörterbuchs aufgerufen und mit Kennnummern und/oder zusätzlichen Kennungen, Chiffrierungen oder Adressen versehen wird.

## Claims

1. Process for the automatic recognition of a spoken text, in particular for use in an automatic speech translation process, the spoken text being converted into electrical signal sequences by means of a microphone and said signal sequences being fed in digitised form into a computer, where they are compared with digital signal sequences (dictionary entries) stored in a speech unit memory and then allocated accordingly, **characterised in that**, in an entering mode for entering speech units into the speech unit memory (14), a digitised spoken text is divided, by means of speech pause recognition, into speech units corresponding at least to parts of sentences or whole sentences, **in that** said speech units are automatically entered in the spoken order substantially under serial identifiers or addresses, **in that** the speech units thus entered are analysed with regard to their length and digital sequence and combined into speech unit groups, each of which has to fulfil certain defined similarity criteria with regard to their bit sequences, **in that**, at at least one higher level, such speech unit groups are assigned to key terms with shorter bit sequences, which again have to fulfil certain defined similarity criteria, and **in that**, in a recognition mode, the comparison and search process begins at the highest level and continues at the at least one next-lower level, the stored speech units recognised as matching the entered speech units and/or a corresponding identifier or address being used to select an output memory (17, 18) for outputting the written and/or spoken and/or mapped speech units in the same or at least one other language.

2. Process according to claim 1, **characterised in that**, in the entering mode, each stored speech unit is additionally assigned the identifiers of the preceding and the following speech unit.

3. Process according to claim 1 or 2, **characterised in that**, in the entering mode, when a speech unit recognised as previously input appears, only this previously input speech unit is assigned the identifier of the speech unit preceding or following the current speech unit.

4. Process according to any of the preceding claims, **characterised in that**, when there are several higher levels, the key terms or bit sequences become progressively shorter towards the higher levels or the similarity criteria become progressively fewer.

5. Process according to any of the preceding claims, **characterised in that**, in a test mode following the input of a spoken text and its speech units, the same text is input for a second time in the recognition mode and the quality of the recognition is checked with reference to consecutive recognised identifiers or other output recognition criteria.

6. Process according to any of the preceding claims, **characterised in that**, in a speech pause check mode, speech pauses appearing before a first entering mode are automatically analysed and at least short and long speech pauses are defined with regard to their chronological length, only longer speech units between long speech pauses being initially considered in the entering mode and the recognition mode, and the short speech units divided by short speech pauses preferably only being analysed after the unsuccessful analysis of the former.

7. Process according to any of the preceding claims, **characterised in that** the digital speech units to be stored and to be analysed are subjected to an automatic data reduction process.

8. Process according to claim 7, **characterised in that** the data are reduced in stages, each reduction stage followed by a check in test mode to determine whether satisfactory recognition is still possible, and **in that** the reduction stage at which satisfactory or good results can just be achieved is set as default for all subsequent data reduction processes.

9. Process according to any of claims 1 to 6, **characterised in that** the digital speech units to be stored and to be analysed are subjected to conversion to a phonetic code.

10. Process according to claim 9, **characterised in that** the international phonetic alphabet is used as a phonetic code.

11. Process according to any of claims 7 to 10, **characterised in that** the converted speech units are stored and analysed in a hexadecimal form.

12. Process according to any of the preceding claims, **characterised in that** information assigned to a stored speech unit is placed in a separate memory or memory area, access being enabled by way of an address or identifier assigned to each speech unit.

13. Process according to any of the preceding claims, **characterised in that** the entering mode is implemented in various languages to generate stored dictionaries in said languages.

14. Process according to any of the preceding claims, **characterised in that** a frequency dictionary first accessed when analysing input speech units is generated from the most frequently appearing speech units.

15. Process according to claim 14, **characterised in that** the stored speech units of the frequency dictionary are placed in a separate memory or memory area.

16. Process according to claim 14 or 15, **characterised in that** the frequency dictionary is, in the manner of a learning system, continually updated in dependence on the frequency with which speech units appear.

17. Process according to any of the preceding claims, **characterised in that** the analysed and recognised speech units are output on the screen and/or a printer (19) and/or an audio device (22) in their original or a translated form.

18. Process according to any of the preceding claims, **characterised in that** speech units to be output are stored in at least one other language in at least one output memory (17, 18).

19. Process according to any of the preceding claims, **characterised in that** the stored speech units are assigned syntactic and/or semantic ciphers and/or context-oriented ciphers and/or target language meanings with corresponding synthesis ciphers, these being, in particular, placed in a separate memory or memory area as assigned information via which access to addresses, in particular, is possible.

20. Process according to claim 19, **characterised in that** the syntactic and semantic ciphers and the context-oriented information are used to determine the content of the speech units in the spoken texts and to express it through special ciphers forming, in particular, an "intermediate language".

21. Process according to claim 20, **characterised in that** the correct meanings corresponding to the speech units are selected in the target languages on the basis of the intermediate language and converted to their correct form by way of synthesis ciphers.

22. Process according to any of the preceding claims, **characterised in that** the stored speech units can additionally be called up by speech input of the assigned identifiers.

23. Process according to any of the preceding claims, **characterised in that** each stored speech unit is individually assigned an additional identifier, cipher or address for access to at least one output memory (17, 18) for outputting assigned speech units in a least one other language.

24. Process according to claim 23, **characterised in that** the stored speech units are in succession assigned the additional identifier, cipher or address by means of speech input.

25. Process according to any of the preceding claims, **characterised in that**, if a speech unit or part of a speech unit cannot be matched to a stored speech unit, a search and separation of prepositions, postpositions, articles, pronouns and/or auxiliary verbs is performed and the remaining part is subjected to a renewed recognition process.

26. Process according to any of the preceding claims, **characterised in that**, following unsuccessful analysis, the speech unit in question is stored in the entering mode or in a buffer mode, to be called up and assigned identifiers and/or additional identifiers, ciphers or addresses when the dictionary is updated.

## Revendications

1. Procédé de reconnaissance automatique d'un texte parlé, en particulier pour l'utilisation dans un procédé traducteur de langage, moyennant quoi le texte parlé est converti au moyen d'un microphone en suites de signaux électriques et ces derniers sont amenés à l'ordinateur sous forme numérisée, où ils sont comparés aux suites de signaux numériques mémorisés dans une mémoire d'unités vocales (enregistrements de dictionnaire) et sont conformément attribués, **caractérisé en ce qu'**un texte parlé numérisé est subdivisé par reconnaissance d'interruption de conversation en unités vocales dans un mode de mémorisation pour mémoriser les unités vocales dans la mémoire d'unités vocales (14), qui correspondent au moins aux éléments de phrase et aux phrases complètes, que ces unités vocales sont automatiquement mémorisées dans une séquence parlée pour l'essentiel sous des numéros d'identification continus ou des adresses, que les unités vocales ainsi mémorisées sont analysées, selon le cas, quant à leur longueur et leur suite numérique et rassemblées dans des groupes d'unités vocales, qui, selon le cas, doivent suffire aux demandes de comparaison déterminées concernant leurs suites binaires, qu'au moins à un niveau supérieur de tels groupes d'unités vocales sont attribués à des concepts clés avec des suites binaires plus courtes, moyennant quoi cértains critères de comparaison doivent être à nouveau remplis, et que dans un mode de reconnaissance on commence par un processus de recherche et de comparaison au niveau le plus haut et ensuite on passe au niveau immédiatement plus bas, moyennant quoi les unités vocales mémorisées, reconnues selon le cas comme conforme aux unités vocales entrées et / ou un indicatif ou une adresse de sélection d'une mémoire de sortie (17,18) sont implémentés pour la sortie d'unités vocales écrites et /ou parlées et / ou illustrées dans un langage identique ou au moins une autre langage.

2. Procédé selon la revendication 1,
**caractérisé en ce que** dans un mode de reconnaissance de chaque unité vocale mémorisée des numéros d'identification sont en outre attribués à l'unité vocale précédente et suivante.

3. Procédé selon la revendication 1,
**caractérisé en ce que** dans un mode de reconnaissance lors de l'apparition d'une unité vocale, qui est reconnue comme déjà entrée, seulement les numéros d'identification de cette unité vocale sont en outre attribués à cette unité vocale déjà entrée.

4. Procédé selon une des revendications mentionnées,
**caractérisé en ce que** lors de plusieurs niveaux supérieurs les concepts clés ou les suites binaires pour des niveaux supérieurs sont de plus en plus courts ou que les critères de comparaison sont de plus en plus réduits.

5. Procédé selon une des revendications mentionnées,
**caractérisé en ce que** dans un mode de reconnaissance après l'entrée d'un texte parlé et la mémorisation de ses unités vocales, le même texte est entré une seconde fois en mode de reconnaissance et que la qualité de reconnaissance est contrôlée à l'aide des numéros d'identifications successifs reconnus ou d'autres critères de reconnaissances sortis.

6. Procédé selon une des revendications mentionnées,
**caractérisé en ce que** dans un mode de contrôle d'interruption de conversation, les interruptions de conversation qui surviennent sont automatiquement analysées avant un premier mode de mémorisation et quant à leur longueur dans le temps, des interruptions de conversation au moins courtes et longues sont définies, moyennant quoi en mode de mémorisation et de reconnaissance on tient compte en premier lieu des unités vocales uniquement plus longues entre les longues interruptions de conversation et de préférence les unités vocales courtes partitionnées par des courtes interruptions de conversation sont analysées immédiatement après une analyse inefficace.

7. Procédé selon une des revendications mentionnées,
**caractérisé en ce que** les unités vocales numériques à analyser et à mémoriser sont soumises à un procédé automatique de réduction des données.

8. Procédé selon la revendication 7,
**caractérisé en ce que** la réduction des données est effectuée par étapes, moyennant quoi on vérifie après chaque étape de réduction en mode de test, si une autre reconnaissance satisfaisante est possible et que cette étape de réduction est prédéfinie pour tous les processus suivants de réduction de données, dans lesquels on réalise des bons résultats ou encore satisfaisants.

9. Procédé selon les revendications de 1 à 6,
**caractérisé en ce que** les unités vocales numériques à analyser et à mémoriser sont soumises à une conversion dans un code phonétique.

10. Procédé selon la revendication 9,
**caractérisé en ce que** l'alphabet phonétique est utilisé en tant que code phonétique.

11. Procédé selon les revendications de 7 à 10,
**caractérisé en ce que** les unités vocales converties sont mémorisées et analysées sous forme hexadécimales.

12. Procédé selon une des revendications mentionnées,
**caractérisé en ce que** les informations attribuées à une unité vocale mémorisée sont déposées dans une mémoire ou une zone de mémoire séparée et un accès à une adresse ou à un indicatif attribuée à l'unité vocale respective est possible.

13. Procédé selon une des revendications mentionnées,
**caractérisé en ce que** le mode d'entrée est effectué dans différents langages pour former, selon le cas, des dictionnaires mémorisés dans ces langages.

14. Procédé selon une des revendications mentionnées,
**caractérisé en ce qu'**un dictionnaire de fréquence est formé à partir des unités vocales se produisant le plus souvent, auquel on a d'abord accès par l'analyse des unités vocales entrées.

15. Procédé selon la revendication 14,
**caractérisé en ce que** les unités vocales mémorisées du dictionnaire de fréquence sont interrompues dans une mémoire ou une zone de mémoire séparée.

16. Procédé selon la revendication 14 ou 15,
**caractérisé en ce que** le dictionnaire de fréquence est actualisé selon la catégorie de système d'apprentissage de manière continue en fonction des fréquences d'unités vocales qui surviennent.

17. Procédé selon une des revendications mentionnées,
**caractérisé en ce que** les unités vocales analysées et reconnues sont sorties sur l'écran et / ou une imprimante (19) et / ou sur un dispositif de reproduction sonore (22) sous une forme identique ou traduite.

18. Procédé selon une des revendications mentionnées,
**caractérisé en ce qu'**au moins des unités vocales extraites d'une mémoire de sortie (17, 18) sont mémorisées au moins dans une autre langage.

19. Procédé selon une des revendications mentionnées,
**caractérisé en ce que** les unités vocales mémorisées sont dotées de chiffrages syntaxiques et / ou sémantiques et / ou de chiffrages contextuels et / ou de significations de langage d'exécution avec des chiffrages de synthèse correspondants, qui sont déposés en particulier dans une mémoire ou une zone de mémoire séparée, sur laquelle un accès aux adresses peut être en particulier possible.

20. Procédé selon la revendication 19,
**caractérisé en ce que** les chiffrages syntaxiques et sémantiques ainsi que les informations contextuelles y sont utilisés afin de déterminer et d'exprimer le contenu des unités vocales dans les textes parlés par des chiffrages spécifiques, qui forment en particulier un « langage intermédiaire ».

21. Procédé selon la revendication 20,
**caractérisé en ce que** les significations correctes correspondant aux unités vocales sont choisies en se basant sur le langage intermédiaire dans le langage d'exécution et sont amenées dans la forme correcte correspondante par des chiffrages de synthèse.

22. Procédé selon une des revendications mentionnées,
**caractérisé en ce que** les unités vocales mémorisées sont accessibles également par le biais d'entrées de conversation des numéros d'identification attribués.

23. Procédé selon une des revendications mentionnées,
**caractérisé en ce que**. chaque unité vocale mémorisée est dotée individuellement d'un indicatif, d'un chiffrage ou d'une adresse supplémentaire, sur lequel un accès à une mémoire de sortie (17, 18) au moins pour la sortie des unités vocales attribuées est réalisable dans au moins un autre langage.

24. Procédé selon la revendication 23,
**caractérisé en ce que** les unités vocales mémorisées les unes après les autres sont dotées d'un indicatif, d'un chiffrage ou d'une adresse supplémentaire par le biais d'une entrée par voix.

25. Procédé selon une des revendications mentionnées,
**caractérisé en ce que** lors de l'attribution impossible d'une unité vocale ou d'une unité partielle d'une unité vocale à une unité vocale mémorisée, sont réalisées une recherche et une séparation des prépositions, des postpositions, des articles, des pronoms et / ou des verbes auxiliaires et qu'un nouveau processus de reconnaissance est effectué pour l'élément résiduel.

26. Procédé selon une des revendications mentionnées,
**caractérisé en ce qu'**après une analyse inefficace d'une unité vocale, cette dernière est mémorisée en mode d'entrée ou en un mode de mémorisation intermédiaire puis appelée lors d'une actualisation du dictionnaire, et elle est dotée de numéros d'identification et / ou d'indicatifs, de chiffrages ou d'adresses supplémentaires.
